# EUROPEAN PATENT APPLICATION

(11) **EP 4 787 560 A1**
(43) Date of publication of application: **05.08.2026**
(21) Application number: 24872893.3
(22) Date of filing: 25.09.2024
(51) Int. Cl.: H01M 50/131, H01M 50/126, H01M 50/133, H01M 50/121, H01M 50/119, H01M 50/105, H01M 50/116, H01M 10/052

(54) **POUCH FILM FOR SECONDARY BATTERY EXTERIOR AND SECONDARY BATTERY COMPRISING SAME**

(30) Priority: 26.09.2023 KR 20230129010; 14.05.2024 KR 20240063137
(71) Applicant: Youlchon Chemical Co., Ltd., Seoul 07057 (KR)
(72) Inventor: SONG, Nok Jung, Seoul 07057 (KR); HAN, Hee Sik, Ansan-si, Gyeonggi-do 15430 (KR); KIM, Hui Hun, Ansan-si, Gyeonggi-do 15430 (KR); SHIN, Sung Chul, Ansan-si, Gyeonggi-do 15430 (KR); SONG, Moon Kyu, Ansan-si, Gyeonggi-do 15430 (KR); JANG, Jee Eun, Ansan-si, Gyeonggi-do 15430 (KR); KIM, Yoo Han, Ansan-si, Gyeonggi-do 15430 (KR); LEE, Doo Hee, Ansan-si, Gyeonggi-do 15430 (KR)
(74) Representative: Meissner Bolte Partnerschaft mbB
(86) International application number: PCT/KR2024/014464
(87) International publication number: WO 2025/071185

(57) **Abstract**

The present invention relates to a pouch film for secondary battery exterior, the pouch film comprising an outer layer, a barrier layer, and a sealant layer including a polyolefin-based resin, which are sequentially stacked, and having a delamination length of 3.0 mm or less, as measured according to measurement conditions. The description of the measurement conditions is as described in the present specification.

## Description

### [Technical Field]

### CROSS-REFERENCE TO RELATED APPLICATION

This application claims the benefit of priority to Korean Patent Application No. 10-2023-0129010, filed in the Korean Intellectual Property Office on September 26, 2023, and Korean Patent Application No. 10-2024-0063137, filed in the Korean Intellectual Property Office on May 14, 2024, the entire contents of which are incorporated herein by reference.

The present disclosure relates to a pouch film for encapsulating a secondary battery and a secondary battery including the same.

### [Background Art]

A secondary battery may be repeatedly charged and discharged, and may be classified into a cylinder-type secondary battery, a prismatic-type secondary battery, and a pouch-type secondary battery. Among them, the pouch-type secondary battery includes a battery main unit (e.g., including a current collector and an electrode, or further including a separator and/or electrolyte solution if necessary), and a pouch film to enclose the battery main unit. The pouch-type secondary battery has a simpler structure and a larger capacity per unit volume. Accordingly, the pouch-type secondary battery has been extensively employed for an energy storage device such as a vehicle battery.

To encapsulate the battery main unit using the pouch film, after bringing innermost layers (e.g., sealant layers) of the pouch film into contact to each other, heat and pressure are applied to contact portions of the innermost layers, such that the contact portions are thermally bonded to each other to form a sealing part, thereby sealing the battery main unit. As described above, the battery main unit sealed by the pouch film may not be substantially exposed to an external environment.

The above-described pouch film may be required to have an excellent sealing property. The sealing property may be evaluated based on the sealing strength of the sealing part obtained through the thermally-bonding process. In other words, when the pouch film has the excellent sealing strength, the sealing property of the pouch film may be evaluated as being substantially excellent.

Meanwhile, the conventional pouch film is difficult to ensure the sufficiently sealing strength, and studies and researches to improve the sealing strength in the sealing part are insufficient.

### [Disclosure]

### [Technical Problem]

Accordingly, there is further required for a pouch film capable of exhibiting an overall excellent sealing property by ensuring the sufficient sealing strength in a sealing part of the pouch film.

### [Technical Solution]

To solve the described-above problem, the present disclosure provides a pouch film for encapsulating a secondary battery, which includes an outer layer, a barrier layer, and a sealant layer including polyolefin resin, which are sequentially laminated, in which a peeling length measured depending on a following measuring condition is at most 3.0 mm,

### [Measuring condition]

(1) The pouch film (having a width of 200 mm and a height of 100 mm) for encapsulating the secondary battery being folded in half and thermally bonded (at a temperature of 190°C, under pressure of 0.2 Mpa, for a time of 1.6 s) to form a sealing part, and the sealing part being cut to have a width of 15 mm and to prepare a test sample (having a width of 15 mm and a height of 50 mm),
(2) the test sample being fixed between two jigs of a tensile testing machine (UTM) such that the sealing part of the test sample is positioned at the center of the UTM at a measurement temperature of 25°C (an initial jig gap of 30 mm), and sealing strength being measured while pulling the test sample at a measurement speed of 50 mm/min, and
(3) the peeling length of the sealing part being measured while pulling the test sample, when the gap between the two jigs of the tensile testing machine is increased by 15 mm from the initial jig gap.

In addition, to solve the described-above problem, the present disclosure provides a lithium secondary battery encapsulated with a pouch film for encapsulating a secondary battery.

### [Advantageous Effects]

According to an embodiment of the present disclosure, as the sealant layer, in which the peeling length measured depending on the above-described measuring condition satisfies the numerical value range, is applied, the pouch film for encapsulating the secondary battery may exhibit the excellent sealing strength.

### [Description of Drawings]

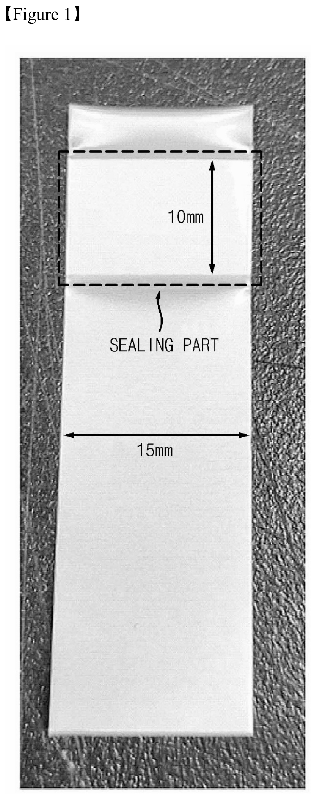

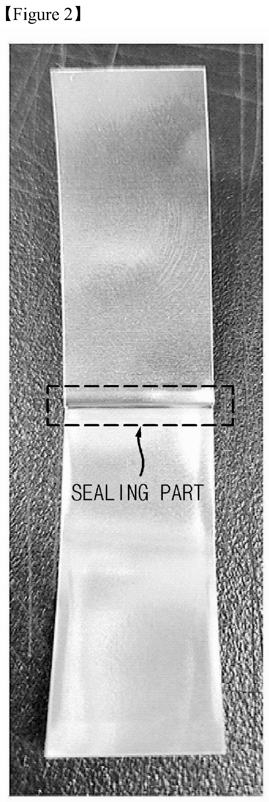

FIGS. 1 and 2 are photographs illustrating a test sample prepared depending on a condition described in a measuring condition according to the present disclosure.

### [Mode for Invention]

The present disclosure relates to a pouch film for encapsulating a secondary battery, which includes an outer layer, a barrier layer, and a sealant layer sequentially laminated on each other, and a lithium secondary battery encapsulated with the pouch film for encapsulating the secondary battery.

### Outer layer

The outer layer may be an outermost layer of the pouch film for encapsulating the secondary battery, and may include a heat-resistance resin layer having a melting point higher than a thermal bonding temperature of a sealant layer to be described later. The type of the heat-resistance resin layer is not particularly limited thereto. For example, the heat-resistance resin layer may include at least one selected from the group consisting of polyamide, polyester, polyolefin, a copolymer thereof, and a blend thereof. In this case, the outer layer may have a single-layer structure or a multi-layer structure including at least one of the above-described materials.

The outer layer may have an appropriate thickness in a range for ensuring sufficient mechanical strength and sufficient moldability, as an exterior material. For example, the thickness of the outer layer may be appropriately selected in a numerical value range from 15 µm to 140 µm, from 25 µm to 110 µm, or from 35 µm and to 100 µm

### Barrier layer

The barrier layer may be an intermediate layer (a layer interposed between the outer layer and the sealant layer) of the pouch film for encapsulating the secondary battery, and may prevent gas and/or moisture from being infiltrated into the barrier layer. The type of the barrier layer is not particularly limited thereto. For example, the barrier layer may include at least one selected from the group consisting of aluminum, stainless steel, copper, titanium, and an alloy thereof, and preferably include aluminum.

The barrier layer may have an appropriate thickness within a range for effectively preventing the gas and/or moisture described above from being infiltrated into the barrier layer and for ensuring sufficient moldability. For example, the thickness of the barrier layer may be appropriately selected in a numerical value range from 20 µm to 150 µm, from 35 µm to 125 µm, or from 60 µm and to 90 µm.

### Sealant layer

The sealant layer may be an innermost layer of the pouch film for encapsulating the secondary battery. In other words, the sealant layer may make direct contact with a battery main unit (e.g., an electrode, a separator, and/or an electrolyte solution). Accordingly, the sealant layer should have excellent electrolyte solution resistance and an excellent insulating property.

To this end, the sealant layer may include at least a polyolefin-based resin. The polyolefin-based resin has excellent electrolyte solution resistance and an excellent insulating property. Accordingly, even the sealant layer including the polyolefin-based resin may also have the excellent solution electrolyte solution resistance and the excellent insulating property derived from the polyolefin-based resin.

The polyolefin-based resin may include, for example, a polyolefin derived from an olefin or a derivative of the olefin, a copolymer thereof, or a blend including at least one from among the above materials. For example, the polyolefin-based resin may include at least one selected from the group consisting of polyethylene, polypropylene, polybutylene, a copolymer derived from a monomer derived from ethylene and/or propylene and a monomer derived from an alpha-olefin, or a blend thereof.

When the sealant layer includes the polyolefin-based resin, as long as a peeling length measured depending on a measuring condition to be described later satisfies a numerical value range described later, the type and content of the polyolefin-based resin, whether an additive (e.g., an elastomer-based additive) is added to the sealant layer, the content of the additive, and the characteristic of the polyolefin-based resin are not particularly limited. In addition, as long as the peeling length measured under a measuring condition to be described later satisfies a numerical value range described later, the sealant layer may have the single-layer structure, or may have a multiple-layer structure including the same material or mutually different materials.

For example, the sealant layer may have a single-layer structure or a laminated structure having at least two layers formed through co-extrusion, and such a sealant layer may be adhered to the barrier layer through the adhesive layer provided on one surface of the barrier layer. In this case, the adhesive layer may be obtained by drying a solvent-based adhesive. In this case, a manner for bonding the sealant layer to the barrier layer by drying such a solvent-type adhesive may be referred to as a solvent dry lamination (Solvent Dry Lamination) manner.

As another example, the sealant layer, which is disposed on the barrier layer without a separate adhesive layer, may include a first sealant layer disposed on the barrier layer in opposition to the outer layer, and a second sealant layer disposed on the first sealant layer. In this case, the pouch film for encapsulating the secondary battery may include the second sealant layer, the first sealant layer, the barrier layer, and the outer layer, in order from the innermost layer to the outermost layer.

In this case, the first sealant layer may be an extrusion coated layer formed by extrusion-coating the polyolefin-based resin. The second sealant layer, which is a film layer including a polyolefin-based resin the same as or different from a resin included in the first sealant layer, may be adhered to the barrier layer through the first sealant layer, which is the extrusion coated layer. With respect to such a sealant layer including the film layer and the extrusion coated layer, a manner for bonding the film layer to the barrier layer by the extrusion coated layer may be referred to as an extrusion lamination manner.

According to an embodiment, a crystallization temperature (Tc) of the sealant layer, which is measured by using differential scanning calorimetry under a cooling condition at a rate of 10 °C/min, may range from 90 °C to 103 °C, and preferably from 95 °C to 100 °C.

### Pouch film for encapsulating the secondary battery

According to the present disclosure, the pouch film for encapsulating the secondary battery includes the outer layer serving as the outermost layer, the barrier layer serving as the intermediate layer, and the sealant layer serving as the innermost layer.

The pouch film for encapsulating the secondary battery may be used for encapsulating the battery main unit. For example, after the sealant layers of two different sheets of pouch films for encapsulating the secondary battery are brought into contact with each other, the pouch films are thermally bonded to form the sealing part, thereby sealing the battery main unit. As another example, one sheet of the pouch film for encapsulating the secondary battery may be folded in half such that the sealant layers are brought into contact with each other. Thereafter, the sealant layers brought into contact with each other are thermally bonded to each other to form the sealing part, thereby sealing the battery main unit.

The pouch film for encapsulating the secondary battery is required to have the excellent sealing strength. In this case, a peeling length of the sealing part measured for the pouch film for encapsulating the secondary battery depending on the measuring condition, which is to be described below, may be one criterion for evaluating the sealing strength characteristic of the pouch film for encapsulating the secondary battery. As the peeling length (for example, a length of a portion which is peeled off, as the sealant layers, which were thermally bonded to each other) of the sealing part measured for the pouch film for encapsulating the secondary battery depending on the measuring condition is shorter, the pouch film for encapsulating the secondary battery exhibits more excellent sealing strength in the sealing part.

### [Measuring condition]

(1) The pouch film (having the width of 200 mm and the height of 100 mm) for encapsulating the secondary battery is folded in half and thermally bonded (at the temperature of 190 °C, under the pressure of 0.2 MPa, and the time of 1.6 s) to form the sealing part. Then, the sealing part is cut to have the width of 15 mm, thereby forming a test sample (having the width of 15 mm and the height of 50 mm), in which the specific shape of the test sample is illustrated in FIGS. 1 and 2).
(2) After the test sample is fixed between two jigs of a tensile testing machine (UTM) such that the sealing part of the test sample is positioned at the center of the UTM at a measurement temperature of 25 °C (an initial jig gap of 30 mm), the sealing strength is measured while pulling the test sample at a measurement speed of 50 mm/min.
(3) When the gap between the two jigs of the tensile testing machine is increased by 15 mm from the initial jig gap, the peeling length of the sealing part is measured while pulling the test sample.

According to the present disclosure, for the pouch film for encapsulating the secondary battery, the peeling length measured depending on the measuring condition may be at least 3.0 mm. Accordingly, the excellent sealing strength characteristic may be exhibited.

In this case, for the pouch film for encapsulating the secondary battery, the peeling length measured depending on the measuring condition may be adjusted to be in a specific range, for example, by controlling not only the material of the outer layer or the barrier layer but also characteristics such as the type and softness of the polyolefin-based resin included in the sealant layer, whether stretching or non-stretching is performed, the addition of various well-known elastomer-based additives (for example, a polyester-based elastomer, a polyamide-based elastomer, a polyurethane-based elastomer, a polyolefin-based elastomer, a polystyrene-based elastomer, a polyurethane-based elastomer, a polyolefin-based elastomer, a polystyrene-based elastomer, a polyester-based elastomer, an acrylic-based elastomer, a copolymer thereof, or a blend thereof), the content of the additive added, a lamination structure/material of the sealant layer and a crystallization temperature (for example, ranging from 90 °C to 103 °C) of the sealant layer, and a difference (for example, ranging from 200 °C to 280 °C) between an extrusion part temperature and a cooling roll temperature during preparation of an extrusion-coated film serving as the sealant layer.

Alternatively, as another example, for the pouch film for encapsulating the secondary battery, the peeling length measured depending on the measuring condition may be adjusted to be in a specific range, for example, by controlling the material used for the barrier layer and/or the outer layer, and the thickness of the material.

According to an embodiment, the total thickness of the pouch film for encapsulating the secondary battery, which may allow the peeling length measured depending on the measuring condition to satisfy the above-described numerical value range, may range from 120 *µ*m to 300 *µ*m, and preferably from 140 *µ*m to 210 *µ*m.

In this case, according to an embodiment of the present disclosure, the total thickness of the pouch film for encapsulating the secondary battery may range from 120 *µ*m to 300 *µ*m while the peeling length measured depending on the measuring condition is at most 3.0 mm. Alternatively, according to an embodiment of the present disclosure, the total thickness of the pouch film for encapsulating the secondary battery may range from 140*µ*m to 190*µ*m while the peeling length measured depending on the measuring condition is at most 1.5 mm. Alternatively, according to an embodiment of the present disclosure, the total thickness of the pouch film for encapsulating the secondary battery may range from 195*µ*m to 210*µ*m while the peeling length measured depending on the measuring condition is at most 2.8 mm.

According to an embodiment, the ratio of the thickness of the sealant layer to the total thickness of the pouch film for encapsulating the secondary battery may range 1:0.3 to 1:0.6, and preferably 1:0.35 to 1:0.5. In this case, when the thickness of the sealant layer satisfies the numerical value range, the pouch film for encapsulating the secondary battery may exhibit the significantly excellent sealing strength, and the peeling length measured depending on the measuring condition may be easily adjusted to satisfy the above-described numerical value range.

According to an embodiment, when the peeling length is measured depending on the measuring condition, the sealant layers thermally-bonded to each other in the pouch film for encapsulating the secondary battery may be peeled off from each other. In this case, substantially no peel-off may be caused between the sealant layer and the barrier layer in the pouch film for encapsulating the secondary battery.

### Lithium secondary battery

According to the present disclosure, a lithium secondary battery includes the battery main unit and the pouch film for encapsulating the secondary battery. The battery main unit is sealed by the pouch film for encapsulating the secondary battery.

The battery main unit may include an anode for the lithium secondary battery, a cathode for the lithium secondary battery, and an electrolyte solution.

The cathode for the lithium secondary battery is not particularly limited, as long as the cathode for the all solid state battery is commonly used. For example, the cathode for the lithium secondary battery may include a cathode active material, such as LiCoO₂, LiMnO₂, LiFeO₄, and Li(Ni_{0.6}Mn_{0.2}Co_{0.2})O₂.

The electrolyte solution may include a lithium salt and a non-aqueous organic solvent. In this case, the lithium salt and the non-aqueous organic solvent are not particularly limited, as long as the lithium salt and the non-aqueous organic solvent are commonly used for an electrolyte of the lithium secondary battery and an organic solvent.

The anode for the lithium secondary battery is not particularly limited, as long as the anode for the all solid state battery is commonly used. For example, the anode for the lithium secondary battery may include an anode active material such as a carbon-based active material or a silicon-based active material.

The pouch film for encapsulating the secondary battery may have the excellent sealing strength. Accordingly, the battery main unit sealed by the pouch film for encapsulating the secondary battery may be prevented from being exposed to an external environment.

Hereinafter, the present disclosure will be described in more detail through examples. However, these examples are provided only for the illustrative purpose, and the scope of the present disclosure is not limited to the embodiments even in any meaning.

### Example 1: Pouch film for encapsulating the secondary battery, which includes outer layer, barrier layer, and sealant layer sequentially laminated

The pouch film for encapsulating the secondary battery was prepared with a laminate, in which PET having the thickness of 12 *µ*m, nylon having a thickness of 25 *µ*m for the outer layer, and an outer layer adhesive layer having the thickness of 3*µ*m are sequentially laminated, an aluminum foil having the thickness of 80 *µ*m and adhered to the outer layer adhesive layer to form a barrier layer, and a sealant layer including a first sealant layer (EC₁) (a difference between an extrusion unit temperature and a cooling roll temperature during preparation of an extrusion-coated film; 270 °C) extrusion-coated with polypropylene-based resin having the thickness of 30 *µ*m, and a second sealant layer (CPP₁) having a thickness of 50 µm and including a non-oriented polypropylene film laminated on the first sealant layer (EC₁).

For the prepared pouch film for encapsulating the secondary battery, the sealing layer including the first sealant layer (EC₁) and the second sealant layer (CPP₁) was employed such that the peeling length measured depending on the measuring condition to be described above satisfies the peeling length shown in Table 1. In this case, the crystallization temperature of an entire sealant layer including the first sealant layer (EC₁) and the second sealant layer (CPP₁) was 98 °C (measurement error; ±2 °C).

### Example 2: Pouch film for encapsulating the secondary battery, which includes outer layer, barrier layer, and sealant layer sequentially laminated

The pouch film for encapsulating the secondary battery was prepared with a laminate, in which PET having the thickness of 12 *µ*m, nylon having a thickness of 25 *µ*m for the outer layer, and an outer layer adhesive layer having the thickness of 3 *µ*m are sequentially laminated, an aluminum foil having the thickness of 60 *µ*m and adhered to the outer layer adhesive layer to form a barrier layer, and a sealant layer including a first sealant layer (EC₂) (a difference between an extrusion unit temperature and a cooling roll temperature during preparation of an extrusion-coated film; 250°C) extrusion-coated with polypropylene-based resin and having the thickness of 30 *µ*m, and a second sealant layer (CPP₂) having a thickness of 50 µm and including a non-oriented polypropylene film laminated on the first sealant layer (EC₂).

For the prepared pouch film for encapsulating the secondary battery, the sealing layer including the first sealant layer (EC₂) and the second sealant layer (CPP₂) was employed such that the peeling length measured depending on the measuring condition to be described above satisfies the peeling length shown in Table 1. In this case, the crystallization temperature of an entire sealant layer including the first sealant layer (EC₂) and the second sealant layer (CPP₂) was 98 °C (measurement error; ±2 °C).

### Example 3: Pouch film for encapsulating the secondary battery, which includes outer layer, barrier layer, and sealant layer sequentially laminated

The pouch film for encapsulating the secondary battery was prepared with a laminate, in which PET having the thickness of 12 *µ*m, nylon having a thickness of 15 µm for the outer layer, and an outer layer adhesive layer having the thickness of 3*µ*m are sequentially laminated, an aluminum foil having the thickness of 40 *µ*m and adhered to the outer layer adhesive layer to form a barrier layer, and a sealant layer including a first sealant layer (EC₃) (a difference between an extrusion unit temperature and a cooling roll temperature during preparation of an extrusion-coated film; 230°C) extrusion-coated with polypropylene-based resin and having the thickness of 30 *µ*m, and a second sealant layer (CPP₃) having a thickness of 50 *µ*m, and including a biaxially oriented polypropylene film laminated on the first sealant layer(EC₃).

For the pouch film for encapsulating the secondary battery, the sealing layer including the first sealant layer (EC₃) and the second sealant layer (CPP₃) was employed such that the peeling length measured depending on the measuring condition to be described above satisfies the peeling length shown in Table 1. In this case, the crystallization temperature of an entire sealant layer including the first sealant layer (EC₃) and the second sealant layer (CPP₃) was 98 °C (measurement error; ±2 °C).

### Reference Example 1: Pouch film for encapsulating secondary battery, which includes outer layer, barrier layer, and sealant layer sequentially laminated

The pouch film for encapsulating the secondary battery was prepared with a laminate, in which PET having the thickness of 12 *µ*m, nylon having a thickness of 25 *µ*m for the outer layer, and an outer layer adhesive layer having the thickness of 3*µ*m are sequentially laminated, an aluminum foil having the thickness of 80 *µ*m and adhered to the outer layer adhesive layer to form a barrier layer, and a sealant layer including a first sealant layer (EC₄) (a difference between an extrusion unit temperature and a cooling roll temperature during preparation of an extrusion-coated film; 260°C) extrusion-coated with polypropylene-based resin having the thickness of 30 *µ*m, and a second sealant layer (CPP₄) having a thickness of 50 µm and including a non-oriented polypropylene film laminated on the first sealant layer (EC₄).

For the pouch film for encapsulating the secondary battery, the sealing layer including the first sealant layer (EC₄) and the second sealant layer (CPP₄) was employed such that the peeling length measured depending on the measuring condition to be described above satisfies the peeling length shown in Table 1. In this case, the crystallization temperature of an entire sealant layer including the first sealant layer (EC₄) and the second sealant layer (CPP₄) was 111°C (measurement error; ±2 °C).

### Reference Example 2: Pouch film for encapsulating secondary battery, which includes outer layer, barrier layer, and sealant layer sequentially laminated

The pouch film for encapsulating the secondary battery was prepared with a laminate, in which PET having the thickness of 12 *µ*m, nylon having a thickness of 25 *µ*m for the outer layer, and an outer layer adhesive layer having the thickness of 3*µ*m are sequentially laminated, an aluminum foil having the thickness of 60 *µ*m and adhered to the outer layer adhesive layer to form a barrier layer, and a sealant layer including a first sealant layer (EC₅) (a difference between an extrusion unit temperature and a cooling roll temperature during preparation of an extrusion-coated film; 265°C) extrusion-coated with polypropylene-based resin having the thickness of 30 *µ*m, and a second sealant layer (CPP₅) having a thickness of 50 µm and including a non-oriented polypropylene film laminated on the first sealant layer (EC₅) .

For the pouch film for encapsulating the secondary battery, the sealing layer including the first sealant layer (EC₅) and the second sealant layer (CPP₅) was employed such that the peeling length measured depending on the measuring condition to be described above satisfies the peeling length shown in Table 1. In this case, the crystallization temperature of an entire sealant layer including the first sealant layer (EC₅) and the second sealant layer (CPP₅) was 111°C (measurement error; ±2 °C).

### Reference Example 3: Pouch film for encapsulating secondary battery, which includes outer layer, barrier layer, and sealant layer sequentially laminated

The pouch film for encapsulating the secondary battery was prepared with a laminate, in which PET having the thickness of 12 *µ*m, nylon having a thickness of 15 µm for the outer layer, and an outer layer adhesive layer having the thickness of 3*µ*m are sequentially laminated, an aluminum foil having the thickness of 40 *µ*m and adhered to the outer layer adhesive layer to form a barrier layer, and a sealant layer including a first sealant layer (EC₆) (a difference between an extrusion unit temperature and a cooling roll temperature during preparation of an extrusion-coated film; 280°C) extrusion-coated with polypropylene-based resin and having the thickness of 30 *µ*m, and a second sealant layer (CPP₆) having a thickness of 50 *µ*m, and including a biaxially oriented polypropylene film laminated on the first sealant layer(EC₆).

For the pouch film for encapsulating the secondary battery, the sealing layer including the first sealant layer (EC₆) and the second sealant layer (CPP₆) was employed such that the peeling length measured depending on the measuring condition to be described above satisfies the peeling length shown in Table 1. In this case, the crystallization temperature of an entire sealant layer including the first sealant layer (EC₆) and the second sealant layer (CPP₆) was 111°C (measurement error; ±2 °C).

### Comparative Example 1: Pouch film for encapsulating secondary battery, which includes outer layer, barrier layer, and sealant layer sequentially laminated

The pouch film for encapsulating the secondary battery was prepared with a laminate, in which PET having the thickness of 12 *µ*m, nylon having a thickness of 25 *µ*m for the outer layer, and an outer layer adhesive layer having the thickness of 3 *µ*m are sequentially laminated, an aluminum foil having the thickness of 60 *µ*m and adhered to the outer layer adhesive layer to form a barrier layer, and a sealant layer including a first sealant layer (EC₇) (a difference between an extrusion unit temperature and a cooling roll temperature during preparation of an extrusion-coated film; 290°C) extrusion-coated with polypropylene-based resin on the barrier layer and having the thickness of 80 *µ*m*.*

For the pouch film for encapsulating the secondary battery, which was prepared, the sealing layer including the first sealant layer (EC₇) such that the peeling length measured depending on the measuring condition to be described above satisfied the peeling length shown in Table 1. In this case, the crystallization temperature of an entire sealant layer including the first sealant layer (EC₇) was 104°C (measurement error; ±2 °C).

### Comparative Example 2: Pouch film for encapsulating secondary battery, which includes outer layer, barrier layer, and sealant layer sequentially laminated

The pouch film for encapsulating the secondary battery was prepared with a laminate, in which PET having the thickness of 12 *µ*m, nylon having a thickness of 15 µm for the outer layer, and an outer layer adhesive layer having the thickness of 3*µ*m are sequentially laminated, an aluminum foil having the thickness of 40 *µ*m and adhered to the outer layer adhesive layer to form a barrier layer, and a sealant layer including a first sealant layer (EC₈) (a difference between an extrusion unit temperature and a cooling roll temperature during preparation of an extrusion-coated film; 300°C) extrusion-coated with polypropylene-based resin on the barrier layer and having the thickness of 80 *µ*m.

For the pouch film for encapsulating the secondary battery, which was prepared, the sealing layer including the first sealant layer (EC₈) such that the peeling length measured depending on the measuring condition to be described above satisfied the peeling length shown in Table 1. In this case, the crystallization temperature of an entire sealant layer including the first sealant layer (EC₈) was 104°C (measurement error; ±2 °C).

**[Table 1]**

| | Example 1 | Example 2 | Example 3 | Reference Example 1 | Reference Example 2 | Referen ce Example 3 | Compara tive Example 1 | Compara tive Example 2 |
|---|---|---|---|---|---|---|---|---|
| Peeling length #1 | 2.0 mm | 1.2 mm | 0.5 mm | 4.0 mm | 7.0 mm | 7.5 mm | 10 mm | 6.0 mm |
| Peeling length #2 | 2.5 mm | 0.9 mm | 0.5 mm | 5.0 mm | 8.0 mm | 6.0 mm | 9.5 mm | 5.0 mm |
| Peeling length #3 | 2.4 mm | 1.1 mm | 0.5 mm | 5.2 mm | 5.0 mm | 8.5 mm | 9.5 mm | 7.0 mm |
| Average (#1 to #3) | 2.3 mm | 1.07 mm | 0.5 mm | 4.73 mm | 6.67 mm | 7.3 mm | 9.6 mm | 6.0 mm |

Referring to Table 1, it may be confirmed that the peeling length measured depending on the measuring condition described above has at least 3.0 mm, for all the pouch films for encapsulating the secondary battery according to Example 1 to Example 3. In this case, a peel-off may be caused between the sealant layers thermally bonded to each other according to all measurement results (peeling length #1, peeling length #2, or peeling length #3) when the peeling length was measured depending on the measuring condition, for all the pouch films for encapsulating the secondary battery according to Example 1 to Example 3.

Alternatively, it may be confirmed that the peeling length measured depending on the measuring condition described above exceeds 3.0 mm for all the pouch films for encapsulating the secondary battery according to Reference Example 1 to Reference Example 3, Comparative Example 1, and Comparative Example 2.

In this case, it may be confirmed that the pouch film for encapsulating the secondary battery according to Comparative Example 1 exceeded 10 mm and the pouch film for encapsulating the secondary battery according to Comparative Example 2 exceeded 6 mm, in the peeling length measured depending on the measuring condition, thereby exhibiting inferior sealing strength. In this case, a peel-off may be caused between the sealant layer and the barrier. according to all measurement results (peeling length #1, peeling length #2, or peeling length #3) when the peeling length was measured depending on the measuring condition, for all the pouch films for encapsulating the secondary battery according to Comparative Example 1 and Comparative Example 2.

### Experimental example 1: Evaluation of sealing strength

The pouch film for encapsulating the secondary battery according to each of Example 1 to Example 3, and Reference Example 1 to Reference Example 3 was folded in half and thermally bonded (at a temperature of 190 °C, under pressure of 0.2 MPa, for a time of 1.6 s) to form a sealing part. Then, the sealing part was cut with the width of 15 mm to prepare a test sample.

After the test sample was fixed between two jigs of a tensile testing machine (UTM) such that the sealing part of the test sample was positioned at the center of the UTM at a measurement temperature of 25 °C (an initial jig gap of 30 mm), the sealing strength was measured while pulling the test sample at a measurement speed of 50 mm/min.

Accordingly, the maximum value of the sealing strength was measured from the graph depending on the variation in jig gap of the sealing strength. The maximum value is shown in following Table 2.

**[Table 2]**

| | Example 1 | Example 2 | Example 3 | Reference Example 1 | Reference Example 2 | Reference Example 3 |
|---|---|---|---|---|---|---|
| The maximum value #1 of sealing strength | 219.6 N | 186.2 N | 161.2 N | 176.0 N | 161.8 N | 151.0 N |
| The maximum value #2 of sealing strength | 217.0 N | 203.6 N | 160.4 N | 185.4 N | 171.1 N | 138.2 N |
| The maximum value #3 of sealing strength | 204.9 N | 210.6 N | 159.8 N | 165.3 N | 182.0 N | 142.7 N |
| Average (#1 to #3) | 213.8 N | 200.1 N | 160.5 N | 175.6 N | 171.6 N | 143.9 N |

Referring to Table 2, it may be recognized that the pouch films for encapsulating the secondary battery according to Example 1 to Example 3, which satisfied the peeling length of at most 3.0 mm depending on the measuring condition described above, exhibited the maximum value of sealing strength higher than the maximum value of sealing strength of the pouch films for encapsulating the secondary battery according to Reference Example 1 to Reference Example 3, which had the peeling length of more than 3.0 mm depending on the measuring condition described above.

### Acknowledgement

The present disclosure is a result obtained through support of the following project.
Project unique number: 1415185612
Project Number: 20022450
Ministry Name: Ministry of Trade, Industry and Energy
Project management (professional) agency name: Korea Planning & Evaluation Institute of Industrial Technology
Research program name: material and component package-type (leading company)
Research project name: development of next-Generation secondary battery pouch capable of implementing high adhesion strength (60 °C) two or more times
Contribution rate: 1/1
Project implementation organization name: Youlchon Chemical Co., Ltd.
Research period: January 1, 2023 to December 31, 2023

## Claims

1. A pouch film for encapsulating a secondary battery, the pouch film comprising:
an outer layer, a barrier layer, and a sealant layer including polyolefin resin, which are sequentially laminated, and
wherein a peeling length, which is measured depending on a following measuring condition, is at most 3.0 mm,
[Measuring condition]
(1) The pouch film (having a width of 200 mm and a height of 100 mm) for encapsulating the secondary battery being folded in half and thermally bonded (at a temperature of 190°C, under pressure of 0.2 Mpa, for a time of 1.6 s) to form a sealing part, and the sealing part being cut to have a width of 15 mm and to prepare a test sample (having a width of 15 mm and a height of 50 mm),
(2) the test sample being fixed between two jigs of a tensile testing machine (UTM) such that the sealing part of the test sample is positioned at the center of the UTM at a measurement temperature of 25°C (an initial jig gap of 30 mm), and sealing strength being measured while pulling the test sample at a measurement speed of 50 mm/min, and
(3) the peeling length of the sealing part being measured while pulling the test sample, when the gap between the two jigs of the tensile testing machine is increased by 15 mm from the initial jig gap.

2. The pouch film of claim 1, wherein a total thickness of the pouch film for encapsulating the secondary battery ranges from 120 *µ*m to 300 *µ*m.

3. The pouch film of claim 1, wherein a ratio of a thickness of the sealant layer to a total thickness of the pouch film for encapsulating the secondary battery ranges 1:0.3 to 0.6.

4. The pouch film of claim 1, wherein the polyolefin-based resin includes a polyolefin derived from an olefin or a derivative thereof, a copolymer thereof, or a blend including at least one thereof.

5. The pouch film of claim 4, wherein the polyolefin-based resin includes:
at least one selected from the group consisting of polyethylene, polypropylene, polybutylene, a copolymer derived from a monomer derived from ethylene and/or propylene and a monomer derived from an alpha-olefin, and a blend thereof.

6. The pouch film of claim 1, wherein a total thickness of the pouch film for encapsulating the secondary battery ranges from 140 *µ*m to 190 *µ*m, and
wherein the peeling length measured depending on the measuring condition is at most 1.5 mm,

7. The pouch film of claim 1, wherein a total thickness of the pouch film for encapsulating the secondary battery ranges from 195 *µ*m to 210 *µ*m, and
wherein the peeling length measured depending on the measuring condition is at most 2.8 mm.

8. The pouch film of claim 1, wherein a peel-off is present between sealant layers thermally bonded to each other, and absent between the sealant layer and the barrier layer, when the peeling length is measured depending on the measuring condition.

9. The pouch film of claim 1, wherein the barrier layer includes:
at least one selected from the group consisting of aluminum, stainless steel, copper, titanium, and an alloy thereof.

10. The pouch film of claim 1, wherein the barrier layer has a thickness ranging from 20 *µ*m to 150 *µ*m.

11. The pouch film of claim 1, wherein the outer layer includes at least one selected from the group consisting of polyamide, polyester, polyolefin, and a copolymer thereof.

12. A lithium secondary battery encapsulated by the pouch film for encapsulating the secondary battery according to any one of claims 1 to 11.
